# EUROPÄISCHE PATENTANMELDUNG

(11) **EP 4 616 978 A1**
(43) Veröffentlichungstag der Anmeldung: **17.09.2025**
(21) Anmeldenummer: 24163279.3
(22) Anmeldetag: 13.03.2024
(51) Int. Cl.: B22F 9/08, B22F 10/25, B22F 10/28, B22F 10/34, B33Y 40/10, B33Y 70/00, C22C 33/02, B33Y 10/00, C23C 4/04, C23C 4/123, F16D 65/12

(54) **VERFAHREN ZUR HERSTELLUNG EINES VERARBEITUNGSPULVERS**

(71) Anmelder: Maschinenfabrik Berthold Hermle AG, 78559 Gosheim (DE)
(72) Erfinder: ADLER, Lucas, 85238 Petershausen (DE)
(74) Vertreter: Hoefer & Partner Patentanwälte mbB

(57) **Zusammenfassung**

Die Erfindung betrifft ein Verfahren (100) zur Herstellung eines Verarbeitungspulvers (200), aufweisend die Schritte Bereitstellen (S1) einer Vorlegierung (104), Verdüsen (S2) der Vorlegierung (104) zum Ausbilden des Verarbeitungspulvers (200), wobei die Vorlegierung (104) zumindest Eisen und Aluminium aufweist, wobei das Aluminium 5-50 Gew.% der Vorlegierung (104) aufweist, wobei das Verarbeitungspulver (200) zumindest einen Reaktionsbildner und einen Reaktionspartner aufweist, welche dazu eingerichtet sind, zumindest einen keramischen Verbund auszubilden.

## Beschreibung

Die vorliegende Erfindung betrifft ein Verfahren zur Herstellung eines Verarbeitungspulvers, ein Verfahren zum Ausbilden eines Metall-Matrix-Verbundwerkstoffes, eine Fertigungsanlage zum Ausbilden eines Metall-Matrix-Verbundwerkstoffes, ein Verarbeitungspulver sowie ein Bauteil.

Derzeit bestehen eine Vielzahl an unterschiedlichen Lösungen zur Ausbildung von Schichten in der Fertigungstechnik. Durch die zunehmende Anzahl an Fertigungstechnologien sowie die erhöhten Qualitätsanforderungen steigt kontinuierlich der Bedarf an innovativen und robusten Methoden zur Schichtausbildung.

Die stetig wachsenden Anforderungen an Fertigungstechnologien als auch die Verfügbarkeitserfordernisse sorgen dafür, dass günstigere und effizientere Fertigungsanlagen stärker nachgefragt werden.

### Offenbarung der Erfindung

Das erfindungsgemäße Verfahren zur Herstellung eines Verarbeitungspulvers mit den Merkmalen des Anspruchs 1 weist gegenüber den Bekannten den Vorteil auf, dass eine endkonturnahe Herstellung insbesondere mittels additiver Fertigungsverfahren oder ähnlichem für geometrisch komplexe Bauteile aus einem schwer zu bearbeitenden Werkstoff, wie beispielsweise einem Metall-Matrix-Verbundwerkstoff, ermöglicht wird. Somit ergeben sich insbesondere Bauteile, welche einen exzellenten Schutz gegen Oxidation und Korrosion aufweisen als auch eine erhöhte Festigkeit und Wärmefestigkeit in einer intermetallischen Phase bereitstellen können. Weiter bevorzugt kann insbesondere das Verarbeitungspulver gezielt in Reaktion mit einer Energiequelle einer Fertigungsanlage gebracht werden, um somit einen Metall-Matrix-Verbundwerkstoff, insbesondere eine Beschichtung, ausbilden zu können.

Dies wird erfindungsgemäß dadurch erreicht, dass das Verfahren zur Herstellung eines Verarbeitungspulvers die Schritte aufweist:
- Bereitstellen einer Vorlegierung,
- Verdüsen der Vorlegierung zum Ausbilden des Verarbeitungspulvers,
wobei die Vorlegierung zumindest Eisen und Aluminium aufweist, wobei das Aluminium 5-50 Gew.% der Vorlegierung aufweist, wobei das Verarbeitungspulver zumindest einen Reaktionsbildner und einen Reaktionspartner aufweist, welche dazu eingerichtet sind, zumindest einen keramischen Verbund auszubilden.

In anderen Worten kann ein Reaktionspartner im Prozessschritt des Verdüsens der Vorlegierung beigemischt werden bzw. freigelegt werden, um somit das Verarbeitungspulver ausbilden zu können. Beispielsweise kann der Reaktionspartner mit Hilfe eines Gasstroms eingeführt werden als auch sich in der Vorlegierung befinden, um im Prozessschritt des Verdüsens freigelegt zu werden. Beispielsweise kann die Vorlegierung zu einer Schmelze aufbereitet werden und anschließend mittels eines Verdüsen, insbesondere mittels eines Gases, in das Verarbeitungspulver umgewandelt werden. Bevorzugt kann somit eine geschickte Verbindung der Pulverherstellung und der anschließenden schmelzflüssigen Pulverkonsolidierung erreicht werden, welche in der Lage ist, innerhalb des Schmelzschrittes in situ einen Metall-Matrix-Verbundwerkstoff zu erzeugen. Dies kann insbesondere bedeuten, dass das verwendete Prozessgas während der Pulververdüsung innerhalb der weiteren Verarbeitung des Pulvers selbst als Legierungselement verwendet werden kann. Weiter bevorzugt kann das verwendete Verdüsungsgas bei der Pulverherstellung als Legierungselement betrachtet werden, wobei eine Vielzahl von möglichen Reaktionspartner umfasst sein kann. Weiter bevorzugt können die chemischen Bindungen für einen Metall-Matrix-Verbundwerkstoff im Pulverpartikel erreicht werden und in einem späteren verschmelzenden Verarbeitungsschritt mit den richtigen Prozessbedingungen in der Lage sein, in situ einen Metall-Matrix-Verbundwerkstoff mit neuen Eigenschaften bereitzustellen. Weiter bevorzugt können Mischungsvorgänge stattfinden, welche während der aufschmelzenden Verarbeitung des Pulverwerkstoffes typischerweise in kurzer Zeit ablaufen, um somit viele kleine Ausscheidungen innerhalb der vergleichsweise kurzen schweißflüssigen Phase während der Pulververarbeitung durch aufschmelzende pulverbasierte Herstellungsverfahren zu erzeugen. Somit kann eine in-situ Erzeugung eines verschleißfesten Metall-Matrix-Verbundwerkstoffs auf Basis kostengünstiger Eisenaluminide und harter Nitride erreicht werden. Bevorzugt kann es sich bei der Vorlegierung um eine Legierung auf Basis von Eisen mit Zusätzen von Aluminium und Titan handeln. Aluminium kann mit Anteilen zwischen 10 bis 40 Gew.% die Bildung der FeAl und Fe3AI-Phase, sogenannten Eisenaluminiden, bewirken, welche als potentieller Ersatz für hochlegierte Stähle gelten. Eisenaluminide stellen vorzugsweise intermetallische Phasen dar, welche durch den damit einhergehenden Bindungscharakter hohe Festigkeiten und hohe Warmfestigkeiten erreichen können. Weiterhin kann durch die Zugabe von ausreichend großen Mengen Aluminium (>10 Gew.%), eine stark gesteigerte Oxidations- und Korrosionsfestigkeit der Eisenbasis erreicht werden. Die Bereitstellung von Aluminiumatomen an der Oberfläche des Material kann zu einer Bildung einer im Wesentlichen reinen Aluminiumoxidschicht führen, welche sehr widerstandsfähig gegen korrosive und oxidative Angriffe ist.

Die Unteransprüche zeigen bevorzugte Weiterbildungen der Erfindung.

Bevorzugt ist das Verarbeitungspulver dazu eingerichtet, mittels des Reaktionsbildners einen Metall-Matrix-Verbundwerkstoff auszubilden.

Ein Vorteil dieser Ausführungsform ist, dass durch Bereitstellung des Verarbeitungspulvers bereits alle Grundmaterialien zum Ausbilden des Metall-Matrix-Verbundwerkstoffes vorliegen und durch eine Temperaturerhöhung, beispielsweise während einem Ausbilden einer Schicht mittels eines Lasers, sich das Verarbeitungspulver in einem Metall-Matrix-Verbundwerkstoff umwandeln kann.

Weiter bevorzugt ist der Reaktionspartner Stickstoff, wobei der Reaktionsbildner ein Nitridbildner ist, wobei das Verfahren ferner die Schritte aufweist:
- Verdüsen der Vorlegierung mittels des Stickstoffs zum Ausbilden des Verarbeitungspulvers durch Einbringen des Stickstoffs in die Vorlegierung während des Verdüsens, wobei der Stickstoff und der Nitridbildner dazu eingerichtet sind, ein keramisches Nitrid auszubilden.

Ein Vorteil dieser Ausführungsform ist, dass die Anzahl der Prozessschritte zum Ausbilden Verarbeitungspulvers reduziert werden kann, da der Stickstoff direkt beim Verdüsen der Vorlegierung in das Verarbeitungspulver eingebracht werden kann. Weiter bevorzugt kann durch die Kombination des Stickstoffs und des Nitridbilders in dem Verarbeitungspulver das Einbringen einer thermischen Energie, wie beispielsweise mittels eines Lasers, genügen, um den keramischen Nitriden auszubilden.

Weiter bevorzugt weist das Verarbeitungspulver Stickstoff mit zumindest 500 ppm-Gew.% gelöst im Verarbeitungspulver auf oder Stickstoff als Pore im Verarbeitungspulver auf.

Ein Vorteil dieser Ausführungsform ist, dass sichergestellt werden kann, dass genügend Stickstoff im Verarbeitungspulver vorliegt, um mittels des Nitridbildners einen keramischen Nitriden ausbilden zu können.

Weiter bevorzugt ist der Nitridbildner ausgewählt aus der Gruppe umfassend: Titan, Hafnium und/oder Zirkon.

Ein Vorteil dieser Ausführungsform ist, dass mittels des Titan, Hafnium und/oder Zirkons gut verfügbare Materialien genutzt werden können, um entsprechende Nitride ausbilden zu können. Weiter bevorzugt weist die Vorlegierung zumindest teilweise Titan, Hafnium und/oder Zirkon auf, um somit eine Bildung von Aluminiumnitrid verhindern zu können. Weiter bevorzugt können zur Nitridbildung die Elemente gewählt werden, welche eine Affinität zu Stickstoff aufweisen. Bevorzugt kann die Bildungsenthalpie dieser Nitride günstiger sein als für Aluminium, sodass das Aluminium in der Legierung zumindest teilweise verbraucht wird. Weiter bevorzugt weisen die Nitride mit Titan, Hafnium und/oder Zirkon eine sehr hohe Härte auf.

Weiter bevorzugt weist die Vorlegierung Chrom auf, wobei das Chrom dazu eingerichtet ist, einen Anteil des Stickstoffs im Verarbeitungspulver zu erhöhen.

Ein Vorteil dieser Ausführungsform ist, dass durch das Chrom die Wahrscheinlichkeit erhöht wird, dass ein Stickstoff, welcher mittels des Verdüsens in das Verarbeitungspulver eingebracht wird, sich im Verarbeitungspulver sammelt. Weiter bevorzugt umfasst Chrom auch chromhaltige Legierungen, wie bspw. FeCrN. Weiter bevorzugt sind von Chrom im Wesentlichen gleichwirkende Legierungen umfasst, wie bspw. FeMnN, Si4N. Bevorzugt bewirken die genannten Legierungen eine Steigerung des Stickstoffanteils insbesondere in der Vorlegierung und/oder dem Verarbeitungspulver. Weiter bevorzugt kann sich ein synergetischer Effekt ergeben, wenn Chrom zur Stickstoffanreicherung in der Vorlegierung vorliegt und Stickstoff zum Verdüsen verwendet wird, sodass besonders hohe Anteile Stickstoff im Verarbeitungspulver erreicht werden können.

Weiter bevorzugt ist der Reaktionspartner Stickstoff, wobei der Reaktonsbildner ein Nitridbildner ist, wobei die Vorlegierung eine vorbestimmte Menge an gebundenem Stickstoff aufweist, wobei das Verfahren ferner den Schritt aufweist:
- Verdüsen der Vorlegierung zum Lösen des Stickstoffs aus der Vorlegierung, sodass der Stickstoff im Verarbeitungspulver ist.

Ein Vorteil dieser Ausführungsform ist, dass mit dem Einschluss des Stickstoffs in der Vorlegierung dieser nicht mehr als Prozessgas zum Verdüsen genutzt werden kann und somit die Flexibilität des Verdüsungsschritts erhöht werden kann.

Weiter bevorzugt ist der Reaktionspartner Sauerstoff, wobei der Reaktionsbildner ein Oxidbildner ist, wobei das Verfahren ferner die Schritte aufweist:
- Verdüsen der Vorlegierung mittels des Sauerstoff zum Ausbilden des Verarbeitungspulvers durch Einbringen des Sauerstoffs in die Vorlegierung, wobei der Sauerstoff und der Oxidbildner dazu eingerichtet sind, einen keramischen Oxiden auszubilden.

Ein Vorteil dieser Ausführungsform ist, dass kostengünstige Materialien dazu eingesetzt werden können, einen keramischen Oxiden auszubilden, insbesondere durch die Kombination von Sauerstoff und dem Oxidbildner. Bevorzugt kann dabei ein Prozessgas zum Verdüsen insbesondere mehr als 25 Gew.% und/oder Vol.% Sauerstoff umfassen.

Vorzugsweise ist der Reaktionspartner Kohlenstoff, wobei der Reaktionsbildner ein Carbidbildner ist, wobei das Verfahren ferner die Schritte aufweist:
- Verdüsen der Vorlegierung mittels des Kohlenstoffs zum Ausbilden des Verarbeitungspulvers durch Einbringen des Kohlenstoffs in die Vorlegierung, wobei der Kohlenstoff und der Carbidbildner dazu eingerichtet sind, einen keramischen Carbiden auszubilden.

Ein Vorteil dieser Ausführungsform ist, dass durch die gute Verfügbarkeit der Materialien die Herstellkosten weiter reduziert werden können.

Ein weiterer Aspekt der Erfindung betrifft ein Verfahren zum Ausbilden eines Metall-Matrix-Verbundwerkstoffes, welches die Schritte aufweist:
- Bereitstellen eines Verarbeitungspulvers, welches mittels des Verfahrens, wie voranstehend und nachfolgend beschrieben, hergestellt wurde,
- Aufbringen des Verarbeitungspulvers entlang eines vorbestimmten Pfades zum Ausbilden des Metall-Matrix-Verbundwerkstoffes.

Ein Vorteil dieser Ausführungsform ist, dass durch das Aufbringen des Verarbeitungspulvers entlang des vorbestimmten Pfades nur an den Teilen eines Bauteils der Metall-Matrix-Verbundwerkstoff ausgebildet wird, welche dafür vorgesehen sind. Weiter bevorzugt kann somit der Ausschuss des Metall-Matrix-Verbundwerkstoffes deutlich reduziert werden als auch eventuelle Nachbereitungsschritte entfallen. Bevorzugt kann die Vorlegierung mittels des Verdüsens zu einem gasatomisierten Metallpulver umgewandelt werden. Weiter bevorzugt können die Schritte des Bereitstellens des Verarbeitungspulvers und des Aufbringens des Verarbeitungspulvers unter einer Schutzgasatmosphäre erfolgen, welche zumindest teilweise ein Prozessgas wie Stickstoff aufweist. Weiter bevorzugt kann der Metall-Matrix-Verbundwerkstoff auch mittels thermischen Spritzen ausgebildet werden. Insbesondere wird das Verarbeitungspulver auf das zu bearbeitende Bauteil aufgebracht und gleichzeitig erhitzt, insbesondere in einem vorbestimmten Temperaturbereich, sodass der Metall-Matrix-Verbundwerkstoffs ausgebildet werden kann. Weiter bevorzugt kann das Aufbringen des Verarbeitungspulvers mittels Kaltgasspritzen erfolgen. Vorzugsweise kann in diesem Fall das Aufbringen des Verarbeitungspulvers ein nachgelagertes Erwärmen mit einem Laser oder ähnlichem umfassen, welcher den Metall-Matrix-Verbundwerkstoff ausbilden kann.

Weiter bevorzugt erfolgt das Aufbringen des Verarbeitungspulvers in einem vorbestimmten Temperaturbereich, wobei der vorbestimmte Temperaturbereich dazu eingerichtet ist, dass ein Reaktionspartner des Verarbeitungspulvers mittels eines Reaktionsbildners des Verarbeitungspulvers mit einem Matrixwerkstoff des Verarbeitungspulvers den Metall-Matrix-Verbundwerkstoff ausbildet.

Ein Vorteil dieser Ausführungsform ist, dass durch das Einbringen von Hitze der Metall-Matrix-Verbundwerkstoff ausgebildet wird, um somit die vorteilhaften Eigenschaften bereitstellen zu können. Weiter bevorzugt kann eine Abkühlrate gewählt werden, welche dazu eingerichtet ist, einen keramische Hartphase in einer noch flüssigen metallischen Matrixphase auszuscheiden. Mit Erstarrung der metallischen Matrixphase kann es zu einer Fixierung der Hartphase in der metallischen Matrix kommen. Bevorzugt ist die Abkühlrate des gewählten schmelzbasierten Verarbeitungsverfahrens des Pulvers ausreichend hoch, können die sich ausscheidenden keramischen Phasen klein in ihrer Größe und homogen verteilt sein sowie innerhalb der metallischen Matrix eingebunden werden. Das Resultat kann ein Metallmatrixverbundwerkstoff sein, welcher eine metallische Matrix mit gleichmäßig verteilten feinen Hartstoffpartikel umfasst.

Weiter bevorzugt weist das Verfahren ferner den Schritt auf:
- Erhitzen des aufgebrachten Verarbeitungspulvers mittels eines Lasers, sodass der Metall-Matrix-Verbundwerkstoff im vorbestimmten Temperaturbereich ausgebildet wird.

Ein Vorteil dieser Ausführungsform ist, dass durch die Aufteilung des Aufbringens des Verarbeitungspulvers und das Erhitzen des aufgebrachten Verarbeitungspulvers in zwei Schritte, beispielsweise überschüssiges Verarbeitungspulver entfernt werden kann, bevor das Verarbeitungspulver mittels des Lasers erhitzt wird, um somit den Metall-Matrix-Verbundwerkstoff auszubilden.

Weiter bevorzugt weist das Aufbringen des Verarbeitungspulvers ferner den Schritt auf:
- Ausbilden zumindest einer Schicht aus dem Metall-Matrix-Verbundwerkstoff entlang des vorbestimmten Pfades.

Ein Vorteil dieser Ausführungsform ist, dass durch die selektive Ausbildung des Metall-Matrix-Verbundwerkstoffes, wie beispielsweise mittels eines additiven Fertigungsverfahrens, nur die Komponenten mit einem Metall-Matrix-Verbundwerkstoff versehen werden können, die dafür vorgesehen sind und Komponenten, welche im Wesentlichen frei von allen Metall-Matrix-Verbundwerkstoffen sein sollen, diese auch frei bleiben können.

Ein weiterer Aspekt der Erfindung betrifft eine Fertigungsanlage zum Ausbilden eines Verarbeitungspulvers und/oder zum Ausbilden eines Metall-Matrix-Verbundwerkstoffes, welche dazu eingerichtet ist, Schritte des Verfahrens, wie voranstehend und nachfolgend beschrieben, durchzuführen, um das Verarbeitungspulver (200) bereitzustellen, und/oder wobei die Fertigungsanlage dazu eingerichtet ist, ein Verarbeitungspulver, welches mittels eines Verfahrens wie voranstehend und nachfolgend beschrieben, hergestellt wurde, zu dem Metall-Matrix-Verbundwerkstoff auszubilden und/oder dazu eingerichtet ist, das Verfahren wie voranstehend und nachfolgend beschrieben, durchzuführen.

Bspw. kann es sich bei der Fertigungsanlage um eine LB-PBF, EB-PBF, LMD und/oder SLM Anlage handeln. Durch die Verarbeitung von kleinen Volumina können nicht nur feinkristalline Eisenaluminidwerkstoffe erzeugt werden, sondern auch bevorzugt innerhalb des Schmelzvorgangs gebildete Phasen fein und mikroskopisch homogen zu verteilt werden. Ein Beispiel hierfür können Nanometergroße Boride zur Verfestigung des erzeugten Eisenaluminidmaterials sein.

Ein weiterer Aspekt der Erfindung betrifft ein Verarbeitungspulver, welches einen Legierungswerkstoff in Pulverform umfassend Eisen und Aluminium aufweist, wobei das Aluminium 5-50 Gew.% des Verarbeitungspulvers aufweist, wobei das Verarbeitungspulver einen Reaktionsbildner und einen Reaktionspartner aufweist, welche dazu eingerichtet sind, einen keramischen Verbund auszubilden.

Ein weiterer Aspekt der Erfindung betrifft ein Bauteil, welches zumindest eine Schicht eines Metall-Matrix-Verbundwerkstoffes aufweist, welches mittels des Verfahrens, wie voranstehend und nachfolgend beschrieben, hergestellt wurde, wobei das Bauteil eine Bremssystemkomponente ist, insbesondere eine Bremsscheibe.

Bevorzugt kann ein Bauteil aus einen verschleißfesten Metall-Matrix-Verbundwerkstoff auf Basis kostengünstiger Eisenaluminide und harter Nitride bereitgestellt werden.

Ein Vorteil dieser Ausführungsform ist, dass auf den Einsatz von gesundheitsschädlichen Elementen, wie beispielsweise Nickel oder Kobalt, verzichtet werden kann, da durch den Einsatz des Metall-Matrix-Verbundwerkstoffes ähnliche Eigenschaften erreicht werden können.

Nachfolgend wird ein Ausführungsbeispiel der Erfindung unter Bezugnahme auf die begleitende Zeichnung im Detail beschrieben. In der Zeichnung ist:
- Figuren 1-3: ein Diagramm zur Illustration der Funktionsweise des Verarbeitungspulvers gemäß einer Ausführungsform,
- Figuren 4 und 5: ein Flussdiagramm zur Illustration von Schritten des Verfahrens zur Herstellung eines Verarbeitungspulvers,
- Figuren 6 und 7: ein Flussdiagramm zur Illustration von Schritten des Verfahrens zum Ausbilden eines Metall-Matrix-Verbundwerkstoffes gemäß einer Ausführungsform,
- Figur 8: eine Fertigungsanlage gemäß einer Ausführungsform,
- Figur 9: ein Bauteil gemäß einer Ausführungsform.

### Ausführungsformen der Erfindung

Bevorzugt sind alle gleichen Elemente, Einheiten und/oder Schritte in allen Figuren mit den gleichen Bezugszeichen versehen.

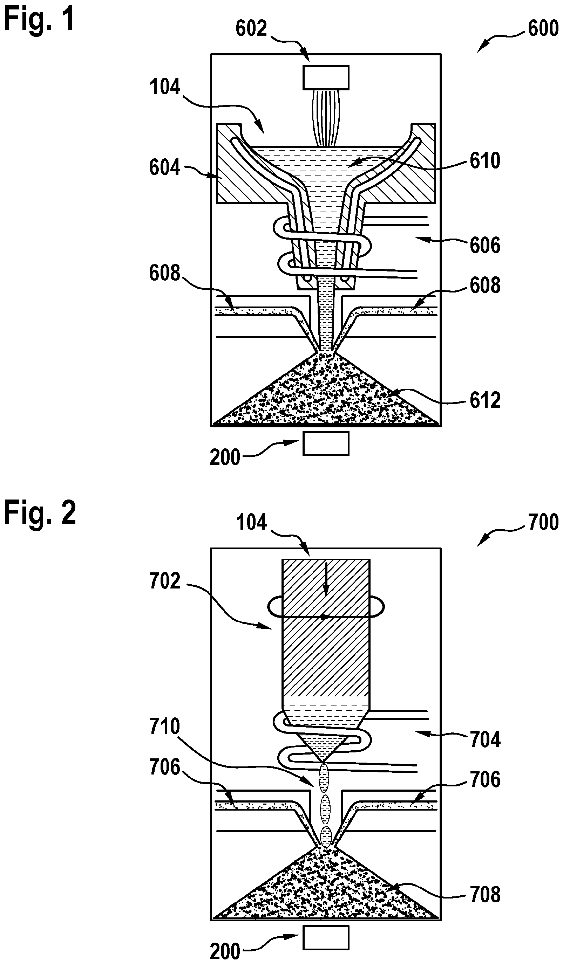

Figur 1 zeigt ein Diagramm 600 zur Illustration der Funktionsweise des Verarbeitungspulvers 200 gemäß einer Ausführungsform. Das Diagramm 600 stellt bevorzugt eine Wärmequelle 602 dar, welche dazu eingerichtet ist, die Vorlegierung 104 zu erhitzen. Bevorzugt kann die Vorlegierung 104 in einem flüssigen Zustand 610 in einem Aufbewahrungsbehältnis 604 verweilen. Weiter bevorzugt kann durch eine weitere Wärmequelle 606 die Vorlegierung 104 weiter erhitzt werden, bevor diese mittels des Kanals 608 verdüst werden kann. Dabei kann insbesondere durch den Kanal 608 ein Prozessgas geleitet werden, welches das Verdüsen der flüssigen Vorlegierung 104 bewerkstelligen kann. Somit kann ein Sprühnebel 612 ausgebildet werden. Im Sprühnebel 612 kann sich insbesondere die Vorlegierung 104 mit dem Prozessgas vermischen, sodass nach einem Abkühlvorgang das Verarbeitungspulver 200 bereitgestellt werden kann. Weiter bevorzugt kann die flüssige Vorlegierung 104 als eine Art Strahl ausgebildet werden, welcher bereits mit dem Prozessgas reagieren kann. Bei der Atomisierung bzw. dem Verdüsen der flüssigen Vorlegierung 104, sodass der Sprühnebel 612 entstehen kann. In dieser Phase kann insbesondere das Prozessgas in Poren eingeschlossen werden.

Weiter bevorzugt kann bereits die flüssige Vorlegierung 104 im Aufbewahrungsbehältnis 604 dem Prozessgas ausgesetzt werden.

Figur 2 zeigt ein Diagramm 700 zur Illustration der Funktionsweise der Bereitstellung des Verarbeitungspulvers 200 gemäß einer Ausführungsform. Bevorzugt kann die Vorlegierung 104 in Form eines Stabes 702 oder ähnlichem vorliegen, welcher mittels einer Drehbewegung und eines Vorschubs in ein Wärmequelle 704 geführt wird. Somit kann die Vorlegierung 104 in einen flüssigen Zustand 710 transferiert werden. Weiter bevorzugt kann mittels der Kanäle 704 ein Prozessgas eingeblasen werden, insbesondere auf die flüssige Vorlegierung 104, um somit ein Sprühnebel 708 oder ähnliches ausbilden zu können, welches das Prozessgas als auch die Vorlegierung in Pulverform aufweist, um nach einer Abkühlphase das Verarbeitungspulver 200 bereitstellen zu können.

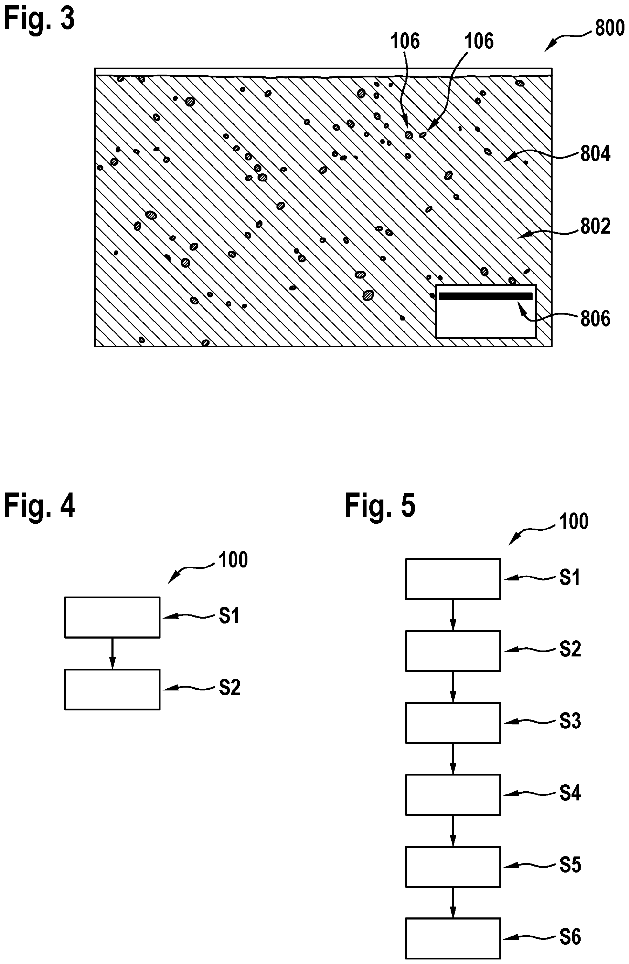

Figur 3 zeigt ein Diagramm 800 zur Illustration der Funktionsweise des Verarbeitungspulvers 200 gemäß einer Ausführungsform. Das Diagramm 800 zeigt bevorzugt ein Schnittbild durch einen mittels des Verarbeitungspulvers 200 erzeugten Metall-Matrix-Verbundwerkstoff.

Bevorzugt kann der Metall-Matrix-Verbundwerkstoff ein Eisenaluminidmatrix 804 aufweisen.

Weiter bevorzugt umfasst der Metall-Matrix-Verbundwerkstoff eine Vielzahl von keramischen Nitriden 106. Wie in dem Diagramm 800 dargestellt ist, weist das Diagramm eine Objektreferenz 806 auf, welche in dem Diagramm 800 1 mm beträgt.

Figur 4 zeigt ein Flussdiagramm zur Illustration von Schritten des Verfahrens 100 zur Herstellung eines Verarbeitungspulvers 200 gemäß einer Ausführungsform. Das Verfahren 100 weist bevorzugt die Schritte auf:
- Bereitstellen S1 einer Vorlegierung 104,
- Verdüsen S2 der Vorlegierung 104 zum Ausbilden des Verarbeitungspulvers 200,
wobei die Vorlegierung 104 zumindest Eisen und Aluminium aufweist, wobei das Aluminium 5-50 Gew.% der Vorlegierung 104 aufweist, wobei das Verarbeitungspulver 200 zumindest einen Reaktionsbildner und einen Reaktionspartner aufweist, welche dazu eingerichtet sind, zumindest einen keramischen Verbund auszubilden.

Figur 5 zeigt ein Flussdiagramm zur Illustration von Schritten des Verfahrens 100 zur Herstellung eines Verarbeitungspulvers 200 gemäß einer Ausführungsform. Das Verfahren 100 weist die gleichen Schritte S1 und S2 auf, wie diese bereits hinsichtlich der Figur 4 erläutert wurden. Ferner weist das Verfahren 100 ferner den Schritt auf Verdüsen S3 der Vorlegierung 104 mittels des Stickstoffs zum Ausbilden des Verarbeitungspulvers 200 durch Einbringen des Stickstoffs in die Vorlegierung 104 während des Verdüsens, wobei der Stickstoff und der Nitridbildner dazu eingerichtet sind, einen keramischen Nitriden 106 auszubilden. Weiter bevorzugt umfasst das Verfahren 100 ferner den Schritt auf Verdüsen S4 der Vorlegierung 104 zum Lösen des Stickstoffs aus der Vorlegierung 104, sodass der Stickstoff im Verarbeitungspulver 200 ist. Weiter bevorzugt weist das Verfahren 100 den Schritt auf Verdüsen S5 der Vorlegierung 104 mittels Sauerstoff zum Ausbilden des Verarbeitungspulvers 200 durch Einbringen des Sauerstoffs in die Vorlegierung 104, wobei der Sauerstoff und der Oxidbildner dazu eingerichtet sind, einen keramischen Oxiden auszubilden. Weiter bevorzugt umfasst das Verfahren 100 ferner den Schritt auf Verdüsen S6 der Vorlegierung 104 mittels des Kohlenstoffs zum Ausbilden des Verarbeitungspulvers 200 durch Einbringen des Kohlenstoffs in die Vorlegierung, wobei der Kohlenstoff und der Carbidbildner dazu eingerichtet sind, einen keramischen Carbiden auszubilden.

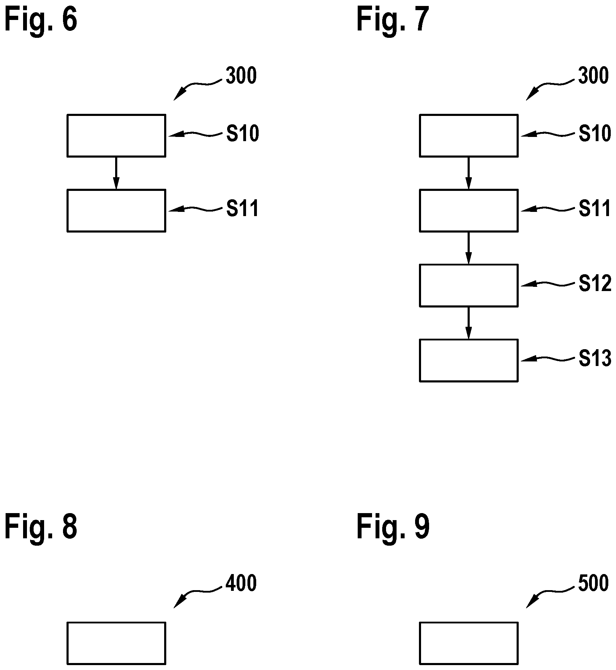

Figur 6 zeigt ein Flussdiagramm zur Illustration von Schritten des Verfahrens 300 zum Ausbilden eines Metall-Matrix-Verbundwerkstoffes gemäß einer Ausführungsform. Das Verfahren 300 zum Ausbilden eines Metall-Matrix-Verbundwerkstoffes weist die Schritte auf Bereitstellen S10 eines Verarbeitungspulvers 200, welches mittels des Verfahrens 100, wie voranstehend und nachfolgend beschrieben, hergestellt wurde, Aufbringen S11 des

Verarbeitungspulvers 200 entlang eines vorbestimmten Pfades zum Ausbilden des Metall-Matrix-Verbundwerkstoffes.

Figur 7 zeigt ein Flussdiagramm zur Illustration von Schritten des Verfahrens 300 zum Ausbilden eines Metall-Matrix-Verbundwerkstoffes gemäß einer Ausführungsform. Das Verfahren 300 zum Ausbilden eines Metall-Matrix-Verbundwerkstoffes weist bevorzugt die Schritte S10 und S11 auf, wie diese bereits hinsichtlich der Figur 6 erläutert wurden. Weiter bevorzugt weist das Verfahren 300 ferner den Schritt auf Erhitzen S12 des aufgebrachten Verarbeitungspulvers 200 mittels eines Lasers, sodass der Metall-Matrix-Verbundwerkstoff im vorbestimmten Temperaturbereich ausgebildet wird. Weiter bevorzugt weist das Aufbringen des Verarbeitungspulvers ferner den Schritt auf Ausbilden S13 zumindest einer Schicht aus dem Metall-Matrix-Verbundwerkstoff entlang des vorbestimmten Pfades.

Figur 8 zeigt eine Fertigungsanlage 400 gemäß einer Ausführungsform. Die Fertigungsanlage 400 zum Ausbilden eines Metall-Matrix-Verbundwerkstoffes ist dazu eingerichtet ist, ein Verarbeitungspulver 200, welches mittels des Verfahrens 100, wie voranstehend und nachfolgend beschrieben, hergestellt wurde, zu dem Metall-Matrix-Verbundwerkstoff auszubilden und/oder dazu eingerichtet ist, das Verfahren 300, wie voranstehend und nachfolgend beschrieben, durchzuführen.

Figur 9 zeigt ein Bauteil 500 gemäß einer Ausführungsform. Das Bauteil 500 weist zumindest eine Schicht eines Metall-Matrix-Verbundwerkstoffes auf, welches mittels des Verfahrens 300, wie voranstehend und nachfolgend beschrieben, hergestellt wurde, wobei das Bauteil eine Bremssystemkomponente ist, insbesondere eine Bremsscheibe.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 100: Verfahren
- 104: Vorlegierung
- 106: keramische Nitride
- 200: Verarbeitungspulver
- 300: Verfahren
- 400: Fertigungsanlage
- 500: Bauteil
- 600: Diagramm
- 602: Wärmequelle
- 604: Aufbewahrungsbehältnis
- 606: Wärmequelle
- 608: Kanal
- 610: flüssiger Zustand
- 612: Sprühnebel
- 700: Diagramm
- 702: Stab
- 704: Wärmequelle
- 708: Sprühnebel
- 710: flüssiger Zustand
- 800: Diagramm
- 804: Eisenaluminidmatrix
- 806: Objektreferenz
- S1 bis S6: Verfahrensschritte des Verfahrens 100
- S10 bis S13: Verfahrensschritte des Verfahrens 300

## Patentansprüche

1. Verfahren (100) zur Herstellung eines Verarbeitungspulvers (200), aufweisend die Schritte:
- Bereitstellen (S1) einer Vorlegierung (104),
- Verdüsen (S2) der Vorlegierung (104) zum Ausbilden des Verarbeitungspulvers (200), wobei die Vorlegierung (104) zumindest Eisen und Aluminium aufweist, wobei das Aluminium 5-50 Gew.% der Vorlegierung (104) aufweist,
wobei das Verarbeitungspulver (200) zumindest einen Reaktionsbildner und einen Reaktionspartner aufweist, welche dazu eingerichtet sind, zumindest einen keramischen Verbund auszubilden.

2. Verfahren (100) nach einem der vorherigen Ansprüche, wobei das Verarbeitungspulver (200) dazu eingerichtet ist, mittels des Reaktionsbildners einen Metall-Matrix-Verbundwerkstoff auszubilden.

3. Verfahren (100) nach einem der vorherigen Ansprüche, wobei der Reaktionspartner Stickstoff ist, wobei der Reaktionsbildner ein Nitridbildner ist, wobei das Verfahren (100) ferner die Schritte aufweist:
- Verdüsen (S3) der Vorlegierung (104) mittels des Stickstoffs zum Ausbilden des Verarbeitungspulvers (200) durch Einbringen des Stickstoffs in die Vorlegierung (104) während des Verdüsens, wobei der Stickstoff und der Nitridbildner dazu eingerichtet sind, ein keramisches Nitrid (106) auszubilden.

4. Verfahren (100) nach Anspruch 3, wobei das Verarbeitungspulver (200) Stickstoff mit zumindest 500 ppm-Gew.% gelöst im Verarbeitungspulver aufweist oder Stickstoff als Pore im Verarbeitungspulver (200) aufweist.

5. Verfahren (100) nach einem der Ansprüche 3 bis 4, wobei der Nitridbildner ausgewählt ist aus der Gruppe umfassend: Titan, Hafnium und/oder Zirkon.

6. Verfahren (100) nach einem der Ansprüche 3 bis 5, wobei die Vorlegierung (104) Chrom aufweist, wobei das Chrom dazu eingerichtet ist, einen Anteil des Stickstoffs im Verarbeitungspulver (200) zu erhöhen.

7. Verfahren (100) nach einem der Ansprüche 1 bis 2, wobei der Reaktionspartner Stickstoff ist, wobei der Reaktionsbildner ein Nitridbildner ist, wobei die Vorlegierung (104) eine vorbestimmte Menge an gebundenem Stickstoff aufweist, wobei das Verfahren (100) ferner den Schritt aufweist:
- Verdüsen (S4) der Vorlegierung (104) zum Lösen des Stickstoffs aus der Vorlegierung (104), sodass der Stickstoff im Verarbeitungspulver (200) ist.

8. Verfahren (100) nach einem der Ansprüche 1 bis 2, wobei der Reaktionspartner Sauerstoff ist, wobei der Reaktionsbildner ein Oxidbildner ist, wobei das Verfahren (100) ferner die Schritte aufweist:
- Verdüsen (S5) der Vorlegierung (104) mittels des Sauerstoffs zum Ausbilden des Verarbeitungspulvers (200) durch Einbringen des Sauerstoffs in die Vorlegierung (104), wobei der Sauerstoff und der Oxidbildner dazu eingerichtet sind, einen keramischen Oxiden auszubilden.

9. Verfahren (100) nach einem der Ansprüche 1 bis 2, wobei der Reaktionspartner Kohlenstoff ist, wobei der Reaktionsbildner ein Carbidbildner ist, wobei das Verfahren ferner die Schritte aufweist:
- Verdüsen (S6) der Vorlegierung (104) mittels des Kohlenstoffs zum Ausbilden des Verarbeitungspulvers (200) durch Einbringen des Kohlenstoffs in die Vorlegierung, wobei der Kohlenstoff und der Carbidbildner dazu eingerichtet sind, einen keramischen Carbiden auszubilden.

10. Verfahren (300) zum Ausbilden eines Metall-Matrix-Verbundwerkstoffes, aufweisend die Schritte:
- Bereitstellen (S10) eines Verarbeitungspulvers (200), welches mittels des Verfahrens (100) nach einem der Ansprüche 1 bis 9 hergestellt wurde,
- Aufbringen (S11) des Verarbeitungspulvers (200) entlang eines vorbestimmten Pfades zum Ausbilden des Metall-Matrix-Verbundwerkstoffes.

11. Verfahren (300) nach Anspruch 10, wobei das Aufbringen des Verarbeitungspulvers (200) in einem vorbestimmten Temperaturbereich erfolgt, wobei der vorbestimmte Temperaturbereich dazu eingerichtet ist, dass ein Reaktionspartner des Verarbeitungspulvers (200) mittels eines Reaktionsbildners des Verarbeitungspulvers (200) mit einem Matrixwerkstoff des Verarbeitungspulvers (200) den Metall-Matrix-Verbundwerkstoff ausbildet.

12. Verfahren (300) nach Anspruch 11, wobei das Verfahren ferner den Schritt aufweist:
- Erhitzen (S12) des aufgebrachten Verarbeitungspulvers (200) mittels eines Lasers, sodass der Metall-Matrix-Verbundwerkstoff im vorbestimmten Temperaturbereich ausgebildet wird.

13. Fertigungsanlage (400) zum Ausbilden eines Verarbeitungspulvers (200) und/oder zum Ausbilden eines Metall-Matrix-Verbundwerkstoffes, welche dazu eingerichtet ist, Schritte des Verfahrens (100) nach einem der Ansprüche 1 bis 9 durchzuführen, um das Verarbeitungspulver (200) bereitzustellen, und/oder wobei die Fertigungsanlage (400) dazu eingerichtet ist, ein Verarbeitungspulver (200), welches mittels eines Verfahrens nach einem der Ansprüche 1 bis 9 hergestellt wurde, zu dem Metall-Matrix-Verbundwerkstoff auszubilden und/oder dazu eingerichtet ist, das Verfahren (300) nach einem der Ansprüche 10 bis 12 durchzuführen.

14. Verarbeitungspulver (200), aufweisend einen Legierungswerkstoff in Pulverform umfassend Eisen und Aluminium, wobei das Aluminium 5-50 Gew.% des Verarbeitungspulvers (200) aufweist, wobei das Verarbeitungspulver (200) einen Reaktionsbildner und einen Reaktionspartner aufweist, welche dazu eingerichtet sind, einen keramischen Verbund auszubilden.

15. Bauteil (500), welches zumindest eine Schicht eines Metall-Matrix-Verbundwerkstoffes aufweist, welches mittels des Verfahrens (300) nach einem der Ansprüche 10 bis 12 hergestellt wurde, wobei das Bauteil eine Bremssystemkomponente ist, insbesondere eine Bremsscheibe.
